# EUROPÄISCHE PATENTSCHRIFT

(11) **EP 1 041 335 B1**
(45) Veröffentlichungstag und Bekanntmachung des Hinweises auf die Patenterteilung: **13.04.2005**
(21) Anmeldenummer: 00102168.2
(22) Anmeldetag: 04.02.2000
(51) Int. Cl.: F16M 11/06

(54) **Gelenk für Geräteträgersysteme**
Hinge for apparatus supporting systems
Articulation pour systèmes de support d'appareil

(30) Priorität: 31.03.1999 DE 29905856 U
(43) Veröffentlichungstag der Anmeldung: 04.10.2000
(73) Patentinhaber: Rose-Elektrotechnik GmbH + Co KG Elektrotechnische Fabrik, D-32457 Porta Westfalica (DE)
(72) Erfinder: Schaadt, Dieter B., 32429 Minden (DE); Schubert, Franz, 32427 Minden (DE)
(74) Vertreter: Philipp, Matthias, Dr.

(56) Entgegenhaltungen:
- EP-A- 0 631 087
- DE-U- 29 821 195
- DE-U- 29 905 856
- US-A- 5 522 118

## Beschreibung

Die Erfindung bezieht sich auf ein Gelenk, insbesondere Wandgelenk und Aufsatz-Drehgelenk für Geräteträgersysteme, bei dem das Tragrohr für das Steuergerät, die Steuertafel od. dgl. direkt vor das Gelenk geschraubt ist.

Bei den bekannten Geräteträgersystemen (z.B. US 5 522 118 A), bei denen das profilierte Tragrohr direkt vor die Gelenke geschraubt wird, ist z. Z. keine Ausrichtmöglichkeit des Tragrohres möglich.

Aufgabe der Erfindung ist es, eine einfache, kostengünstige und leicht durchführbare, stufenlose Nivellierung für das Tragrohr an Wand- und Dreh-Aufsatzgelenken zu schaffen.

Diese Aufgabe wird erfindungsgemäß durch die Merkmale von Anspruch 1 gelöst.

Die Unteransprüche beinhalten Gestaltungsmerkmale, welche vorteilhafte und förderliche Weiterbildungen der Aufgabenlösung darstellen.

Das Wandgelenk und Aufsatz-Drehgelenk für die verschiedensten Geräteträgersysteme ist in einfacher und kostengünstiger Weise mit einer leicht durchführbaren Nivellierung der Tragrohre ausgestattet, die in einem gewissen Bereich gegenüber dem festgelegten Gelenk einrichtbar sind, d. h. in der horizontalen und in der vertikalen Lage.

Diese Nivellierung wird durch eine Justierschraube und eine die durch die Justierschraube erfolgte Einrichtung konternde Sicherungsschraube gelöst, wobei einerseits die Justierschraube im Gelenk schraubbar lagert und gegen die Stirnseite des daran befestigten Tragrohres einwirkt oder aber die Justierschraube in dem Gelenkoberteil angeordnet ist und auf ein Drehlager des Gelenkes drückt, so daß dadurch die stufenlose Verstellung erfolgen kann. Nach dem Einrichten des Tragrohres durch die Justierschraubenverstellung wird dann die Sicherungsschraube angezogen.

Das Tragrohr ist durch Schrauben direkt am Gelenk festgelegt und die Verstellung der Justierschraube sowie die Festsetzung der Sicherungsschraube erfolgt von der Gelenkinnenseite her.

Auf den Zeichnungen ist ein Ausführungsbeispiel der Erfindung in Variation dargestellt, welches nachfolgend näher erläutert wird. Es zeigt:
- Fig. 1: einen Längsschnitt durch ein Wandgelenk mit Justiereinstellung für das am Gelenk befestigte Tragrohr,
- Fig. 2: eine Rückansicht des Wandgelenkes mit Justier- und Sicherungsschraube,
- Fig. 3: einen Längsschnitt durch ein Aufsatz-Drehgelenk mit Justiereinstellung im Aufsatz-Drehgelenk für das am Gelenk befestigte Tragrohr,
- Fig. 4: eine Draufsicht auf das Aufsatz-Drehgelenk mit Justierschrauben und Sicherungsschraube,
- Fig. 5: einen Schnitt durch die Lagerstelle der Justierschraube gemäß Schnittlinie A-A in Fig. 4.

Das Gelenk, insbesondere Wandgelenk (WG) und Aufsatz-Drehgelenk (AG) für Geräteträgersysteme, bei dem das Tragrohr (1) für das Steuergerät, die Steuertafel od. dgl. direkt vor das Gelenk geschraubt wird, zeigt für die Tragrohrausrichtung mindestens eine auf die gelenkseitige Stirnseite (1a) des Tragrohres (1) am Wandgelenk (WG) oder auf ein Gelenkteil (2, 3) des Aufsatz-Drehgelenkes (AG) einwirkende Justierschraube (4) und mindestens eine parallel zur Justierschraube (4) wirkende Sicherungsschraube (5) zur Systemnivellierung.

Die Justierschraube (4) ist von einem Gewindestift, vorzugsweise Gewindestift und Zapfen, und die Sicherungsschraube (5) von einer Zylinderschraube gebildet.

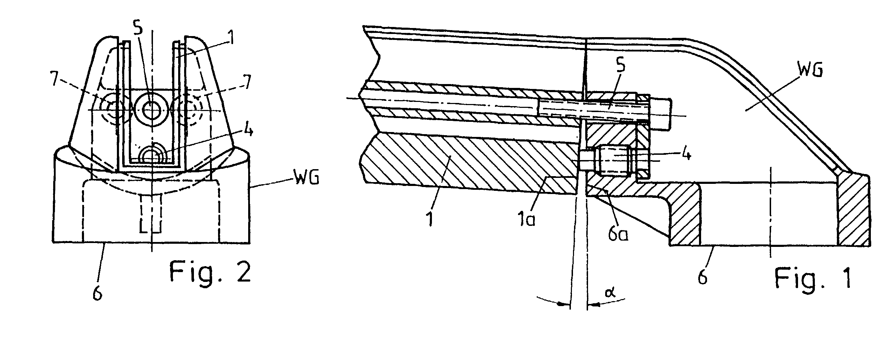

Die Justierschraube (4) verläuft für das Wandgelenk (WG) gemäß Fig. 1 und 2 koaxial zum Tragrohr (1) im Wandgelenk (WG) und drückt gegen die Tragrohr-Stirnseite (1a). Im Abstand zur Justierschraube (4) ist eine parallel dazu verlaufende und in das Tragrohr (1) eingeschraubte Sicherungsschraube (5) vorgesehen, wie in Fig. 1 und 2 gezeigt.

Die Justierschraube (4) und die Sicherungsschraube (5) verlaufen im parallelen Abstand horizontal übereinander oder vertikal nebeneinander und wirken beide in Längsrichtung des Tragrohres (1) und dabei winklig, vorzugsweise rechtwinklig, zur Gelenk-Befestigungsseite (6).

Parallel zur Sicherungsschraube (5) und dabei beiderseits der Sicherungsschraube (5) ist jeweils eine Verbindungsschraube (7), wie Zylinderschraube, angeordnet, die vom Innenraum des Gelenkes (WG) her in Längsrichtung des Tragrohres (1) in dasselbe eingeschraubt ist und das Tragrohr (1) mit seiner Stirnseite (1a) direkt vor dem Gelenk (WG) angeschraubt hält.

Mit (α) ist der Einstellwinkel zwischen Tragrohr-Stirnseite (1a) und Gelenk-Stirnseite (6a) in Fig. 1 bezeichnet, der für die horizontale Lage des Tragrohres (1) durch die Justierschraube (4) eingerichtet und von der dann angezogenen Sicherungsschraube (5) arretiert wird.

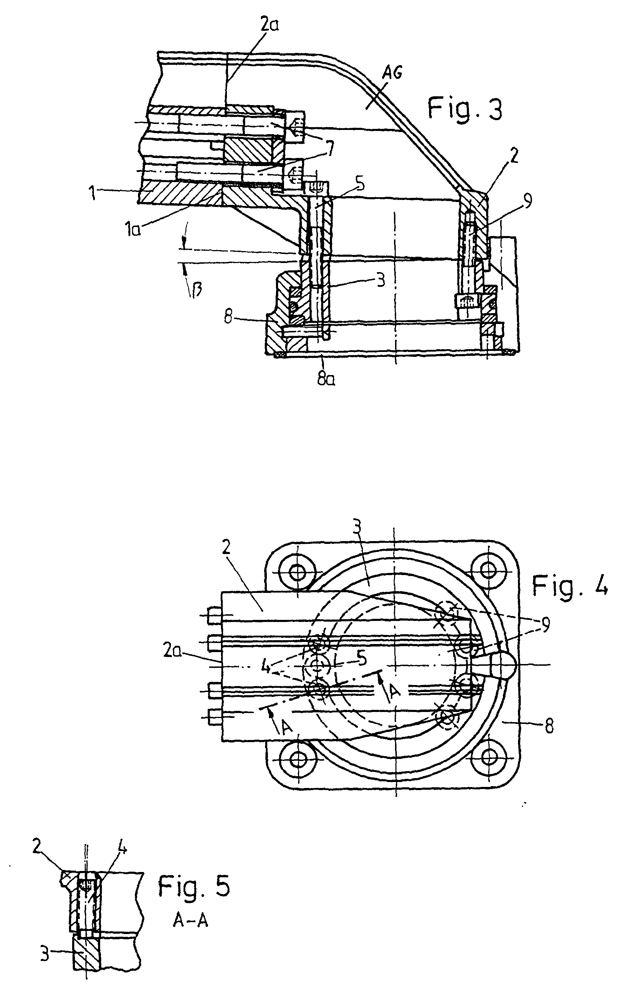

Das Aufsatz-Drehgelenk (AG) gemäß Fig. 3 bis 5 besitzt in seinem Gelenk-Oberteil (2) ein, vorzugsweise zwei, im Abstand parallel nebeneinander verlaufende und winklig zur Tragrohr-Längsrichtung stehende Justierschrauben (4), die gegen ein das Gelenk-Oberteil (2) drehbar aufnehmendes Gelenklager (3) drücken; zwischen den Justierschrauben (4) ist eine parallel dazu verlaufende, das Gelenk-Oberteil (2) durchgreifende und in das Gelenklager (3) eingeschraubte Sicherungsschraube (5) angeordnet.

Das Gelenklager (3) ist in einem Gelenk-Unterteil (8) drehbar gelagert und das Unterteil (8) wird mit seiner parallel zum Tragrohr (1) verlaufenden Befestigungsseite (8a) auf einer Wandfläche befestigt. Das Oberteil (2) steht über Schrauben (9) mit dem Gelenklager (3) in fester Drehverbindung.

Das Tragrohr (1) wird durch zwei vom Innenraum des Gelenk-Oberteiles (2) her in Längsrichtung des Tragrohres (1) in dasselbe eingeschraubte Verbindungsschrauben (7) an der Stirnseite (2a) des Oberteils (2) befestigt.

Mit (β) ist der Einstellwinkel zwischen Gelenk-Oberteil (2) und dem Gelenklager (3) bezeichnet, durch den die Tragrohr-Nivellierung erfolgt.

Zum Einrichten bzw. Nachrichten des profilierten Tragrohres (1) in eine horizontale oder vertikale Lage wird die Sicherungsschraube (5) gelöst und dann die Justierschraube (4) so verstellt, daß das Tragrohr (1) in die jeweilige Lage gelangt, indem entweder die Justierschraube (4) das Tragrohr (1) gegenüber dem Gelenk (WG) verkippt oder das Oberteil (2) gegenüber dem Gelenklager (3) verschwenkt; dann wird die Sicherungsschraube (5) zur Arretierung der eingestellten Tragrohrlage angezogen, was eine Konterung ergibt.

## Patentansprüche

1. Gelenk, insbesondere Wandgelenk und Aufsatz-Drehgelenk für Geräteträgersysteme, bei dem ein Tragrohr für ein Steuergerät, die Steuertafel od. dgl. direkt vor das Gelenk schraubbar ist, **dadurch gekennzeichnet, daß** für die Tragrohrausrichtung mindestens eine Justierschraube (4) und mindestens eine parallel zur Justierschraube (4) wirkende Sicherungsschraube (5) vorgesehen sind, wobei die mindestens eine Justierschraube (4) bei einem Wandgelenk (WG) auf die gelenkseitige Stirnseite (1a) des Tragrohres (1) und bei einem Aufsatz-Drehgelenk (AG) auf ein Gelenkteil (2, 3) des Aufsatz-Drehgelenkes (AG) einwirkt.

2. Gelenk nach Anspruch 1, **dadurch gekennzeichnet, daß** die Justierschraube (4) von einem Gewindestift und die Sicherungsschraube (5) von einer Zylinderschraube gebildet ist.

3. Gelenk nach Anspruch 1 oder 2, **dadurch gekennzeichnet, daß** die Justierschraube (4) koaxial zum Tragrohr (1) im Wandgelenk (WG) verschraubbar lagert und gegen die Tragrohr-Stirnseite (1a) drückt und im Abstand zur Justierschraube (4) eine parallel dazu verlaufende und in das Tragrohr (1) eingeschraubte Sicherungsschraube (5) vorgesehen ist.

4. Gelenk nach Anspruch 1 oder 2, **dadurch gekennzeichnet, daß** das Aufsatz-Drehgelenk (AG) in seinem Gelenk-Oberteil (2) eine, vorzugsweise zwei, im Abstand parallel nebeneinander verlaufende und winklig zur Tragrohr-Längsrichtung stehende und gegen ein das Gelenk-Oberteil (2) drehbar aufnehmendes Gelenklager (3) drückende Justierschraube (4) aufweist und dazwischen eine parallel dazu verlaufende, das Gelenk-Oberteil (2) durchgreifende und in das Gelenklager (3) eingeschraubte Sicherungsschraube (5) vorgesehen ist.

## Claims

1. A hinge, particularly a wall hinge and a rotary mounting hinge for apparatus-supporting systems, wherein a support tube for a control device, control panel or the like is screwable directly in front of the hinge, **characterised in that** at least one adjusting screw (4) and at least one securing screw (5) acting parallel with the adjusting screw (4) are provided for aligning the support tube, wherein the at least one adjusting screw (4) acts on the endface (1a) of the support tube (1) on the hinge side in the case of a wall hinge (WG) and acts on a part (2, 3) of the rotary mounting hinge (AG) in the case of a rotary mounting hinge (AG).

2. A hinge according to claim 1, **characterised in that** the adjusting screw (4) is in the form of a threaded pin and the securing screw (5) is a cheese-head screw.

3. A hinge according to claim 1 or 2, **characterised in that** the adjusting screw (4) is screwable in the wall hinge (WG) coaxially to the support tube (1) and presses against the endface (1a) of the support tube and a securing screw (5) is provided at a distance from the adjusting screw (4) and extends parallel thereto and is screwed into the support tube (1).

4. A hinge according to claim 1 or 2, **characterised in that** the top part (2) of the rotary mounting hinge (AG) comprises one or preferably two spaced-apart parallel side-by-side adjusting screws (4) at an angle to the longitudinal direction of the support tube and pressing against a hinge bearing (3) rotatably receiving the top part (2) of the hinge, and a securing screw (5) parallel thereto, extending through the hinge top part (2) and screwed into the hinge bearing (3) is provided in between.

## Revendications

1. Articulation, en particulier articulation murale et articulation tournante rapportée pour des systèmes de support d'appareil, dans laquelle un tube support pour un appareil de commande, le panneau de commande ou analogue, peut être directement vissé devant l'articulation, **caractérisée en ce que**, pour effectuer l'orientation du tube support, au moins une vis d'ajustement (4) et au moins une vis de sécurité (5) agissant parallèlement à la vis d'ajustement (4) sont prévus, la au moins une vis d'ajustement (4), dans le cas d'une articulation murale (WG), agissant sur la face frontale (la) côté articulation du tube support (1) et, en cas d'une articulation tournante rapportée (AG), agit sur une partie d'articulation (2, 3) de l'articulation tournante rapportée (AG).

2. Articulation selon la revendication 1, **caractérisée en ce que** la vis d'ajustement (4) est formée par une tige filetée, et la vis de sécurité (5) est formée par une vis cylindrique.

3. Articulation selon la revendication 1 ou 2, **caractérisée en ce que** la vis d'ajustement (4) est montée de façon à pouvoir être vissée coaxialement par rapport au tube support (1) dans l'articulation murale (WG), et presse contre la face frontale de tube support (la) et, à distance de la vis d'ajustement (4), est prévue une vis de sécurité (5), s'étendant parallèlement à celle-ci et vissée dans le tube support (1).

4. Articulation selon la revendication 1 ou 2, **caractérisée en ce que** l'articulation tournante rapportée (AG) présente, dans sa partie supérieure d'articulation (2), une, de préférence deux, vis d'ajustement (4), s'étendant à distance parallèlement l'une à côté de l'autre, et placées sous un certain angle par rapport à la direction longitudinale du tube support et pressant contre un palier d'articulation (3) supportant avec possibilité de rotation la partie supérieure d'articulation (2) et, en position intermédiaire, est prévue une vis de sécurité (5) s'étendant parallèlement à celles-ci, traversant la partie supérieure d'articulation (2) et vissée dans le palier d'articulation (3).
